# DEMANDE DE BREVET EUROPEEN

(11) **EP 4 715 335 A1**
(43) Date de publication de la demande: **25.03.2026**
(21) Numéro de dépôt: 25203071.3
(22) Date de dépôt: 18.09.2025
(51) Int. Cl.: G01D 5/14, G01D 5/245, G05G 5/03, G06F 3/01, G06F 3/0362, G01D 7/00, G05G 1/10, G05G 5/06

(54) **CODEUR MAGNÉTIQUE INCRÉMENTAL**

(30) Priorité: 20.09.2024 FR 2410038
(71) Demandeur: THALES, 92190 Meudon (FR)
(72) Inventeur: BESNARD, Mathieu, 33700 MERIGNAC (FR)
(74) Mandataire: Lavoix

(57) **Abrégé**

La présente invention concerne un codeur magnétique incrémental définissant un axe de codeur et comprenant un corps fixe et un corps mobile ;
l'un des corps, dit premier corps, comprenant :
- un premier anneau (51) s'étendant selon une première direction longitudinale et une première direction circonférentielle, l'une desdites premières directions correspondant à la première direction de codage, le premier anneau (51) définissant au moins deux alternances magnétiques différentes ;

l'autre corps, dit deuxième corps, comprenant :
- au moins une première dent de crantage (71) apte à être disposée en regard de chaque alternance magnétique du premier anneau (51) pour créer un crantage selon au moins deux pas de crantage différents en fonction de la position du deuxième corps ;
- une première paire de détecteurs magnétiques disposés en regard du premier anneau (51).

## Description

### DOMAINE DE L'INVENTION

La présente invention concerne un codeur magnétique incrémental.

Plus particulièrement, la présente invention concerne un codeur apte à fournir des signaux logiques binaires représentant des incréments de position relative de deux éléments du codeur, les deux éléments étant mobiles l'un par rapport à l'autre. Avantageusement, un tel codeur est applicable dans le domaine aéronautique, par exemple dans un cockpit de pilotage d'un aéronef.

Typiquement, dans une application pour des équipements aéronautiques, on peut utiliser un codeur angulaire et/ou linéaire pour indiquer à un calculateur de pilotage automatique une consigne d'altitude ou de vitesse que l'opérateur choisit en actionnant un bouton de commande du codeur. La fiabilité du codeur et des informations qu'il délivre est alors un élément essentiel du codeur. Le besoin typique pour un codeur aéronautique peut comprendre un ou plusieurs des éléments suivants : compacité, capacité d'effectuer des multi-tours en rotation et/ou une course linéaire, capacité d'incrémentation et de crantage, etc. Afin de permettre sa certification, le codeur aéronautique doit également pouvoir répondre à des niveaux de sécurité DAL (de l'anglais « *Design Assurance Level* ») élevés, notamment au niveau DAL A.

En particulier, en ce qui concerne la compacité, un codeur présente typiquement un bouton de commande de diamètre entre 10 à 100 mm et de longueur entre 5 et 50 mm (typiquement Ø 16 mm x Ig 16 mm) et un corps de diamètre entre 10 à 100 mm et de longueur entre 5 et 100 mm (typiquement Ø 25 mm x Ig 50 mm) caché derrière le panneau de fixation ou fixé devant ce panneau. Dans ce dernier cas, le bouton englobe le corps du codeur qui est fixé sur le panneau et permet d'être placé autour, voire légèrement en chevauchement d'un moniteur ou écran.

En ce que concerne la capacité d'incrémentation, chaque passage de cran (ou pas) constitue un incrément d'une unité de comptage de la rotation ou de la translation. La résolution angulaire ou linéaire est définie pas le pas (ou cran). Le nombre de pas par tour est de l'ordre de 1 à 32 pas (typiquement 12 pas). Le nombre de pas en translation est de 1 à 10 crans (typiquement 1 cran dans chaque direction pour obtenir un bouton « push/pull » avec un état stable entre les deux crans).

Pour détecter le sens du mouvement en rotation et/ou en translation, le codeur dispose généralement d'au moins deux détecteurs (respectivement pour la rotation et la translation) décalés physiquement entre eux (typiquement un nombre impair de quart de pas). Ces deux détecteurs permettent l'encodage du mouvement en rotation et/ou en translation sur deux bits. Ainsi, l'encodage donne les valeurs successives suivantes : 00, 01, 11, 10 lorsque le codeur tourne et/ou translate dans un sens et les valeurs successives suivantes : 00, 10, 11, 01 lorsque le codeur tourne et/ou translate dans l'autre sens. Il est donc possible de déterminer non seulement l'apparition d'un incrément en rotation et/ou en translation (changement d'état de l'un des bits) mais aussi le sens de rotation (par comparaison entre un état détecté et l'état immédiatement antérieur).

En ce qui concerne la capacité de crantage des codeurs, le passage de cran encodé entraîne généralement un retour tactile qu'un opérateur doit ressentir lors de la manoeuvre du dispositif. Le couple de crantage angulaire peut par exemple être de l'ordre de 1 à 700 mN.m (typiquement 12 mN.m) et l'effort de crantage linéaire de l'ordre de 0,5 à 20 N (typiquement 6 N).

Les codeurs les plus complexes disposent d'encodage et de crantage en rotation et en translation. L'encodage et le crantage en rotation ne doivent pas être bloqués par ceux en translation. Dans ce cas, la détection et le crantage en rotation et en translation doivent pouvoir être utilisés simultanément sans perte de performance. Par exemple, pour saisir une vitesse, le pilote devra simultanément pousser le bouton du codeur et le tourner jusqu'à la valeur choisie.

Enfin, dans certain cas, pour sécuriser le codeur et notamment pour garantir son niveau de sécurité DAL (par exemple DAL A), les fonctions de détection (ou d'encodage) sont au moins doublées.

### ÉTAT DE LA TECHNIQUE

Pour répondre aux besoins précités, les codeurs utilisés dans les applications aéronautiques sont souvent basés sur des solutions opto-mécaniques (détection optique et crantage mécanique) ou électromécanique (détection par contact électrique et crantage **mécanique)** et parfois magnéto-mécanique (détection magnétique et crantage mécanique) ou opto-magnétique ou même purement magnétique.

Par exemple, des codeurs opto-mécaniques sont décrits dans les documents FR 2937129 et FR 2954491. Selon ces documents, la détection en rotation et/ou en translation (encodage) est faite par un codeur optique alors que le maintien en position stable (crantage) est assuré mécaniquement par au moins une bille mise en pression par un ressort sur un chemin de bille (ou came). Même si ces dernières innovations répondent aux besoins décrits ci-dessus et visent à simplifier leur réalisation, ces codeurs opto-mécaniques et électromécaniques demeurent des assemblages complexes constitués de nombreuses pièces de grande précision.

Plus généralement, les solutions actuelles à crantage mécanique génèrent de la friction (exemple : bille contre came) et de l'usure ce qui limite la durée de vie du dispositif, notamment lorsque des pièces en plastique sont utilisées. Dans les codeurs électromécaniques, la détection et le crantage sont parfois liés par au moins une pièce mécanique commune qui sert à la fois au click et à la détection via un contact électrique. Ce dernier est souvent exposé au risque d'usure, de « fretting corrosion » (corrosion de contact) et limite la durée de vie du dispositif. De plus, dans les dispositifs opto-mécaniques et parfois électromécaniques, la détection et le crantage sont découplés, c'est-à-dire qu'ils résultent de solution et/ou phénomène différents et sont assez éloignés physiquement. Ce découplage augmente le nombre de pièces et par conséquent, le risque de décalage entre la détection et le crantage. Dans le cas de codeur complexe et sécurisé, le nombre de pièces est encore plus important. Dans ce cas, pour assurer une bonne performance et fiabilité, les codeurs complexes actuels requièrent des pièces de grande précision qui sont plus couteuses.

On connait également le document FR 2370350 qui décrit un codeur magnétique rotatif à aimants mobiles dans lequel le crantage et l'encodage sont issus du phénomène magnétique. Toutefois, le codeur de ce document est uniquement rotatif et utilise des aimants mobiles qui sont exposés à des risques de frottement et de coincement.

En résumé, les solutions électromécaniques présentent le plus fort risque de fatigue tant au niveau du crantage que de l'encodage car elles génèrent le plus de frottement. Par ailleurs, l'encodage électrique est exposé à la corrosion de contact (« fretting corrosion »). Ces inconvénients diminuent la fiabilité et limitent la durée de vie du dispositif.

**Les solutions** opto-mécaniques et magnéto-mécaniques conservent le risque de fatigue au niveau du crantage mécanique.

Les solutions opto-magnétiques utilisent des phénomènes sans contact différents. Ces solutions sont plus encombrantes si on souhaite faire un codeur plus complexe (exemple : codeur rotatif avec « push/pull ») et sécurisé.

Les solutions purement magnétiques ne permettent pas de répondre à l'ensemble des besoins précités.

On connait enfin le document FR 3135791 proposant une solution purement magnétique permettant de mettre en œuvre un codage selon l'une des directions choisies, par exemple parmi la direction de translation et la direction de rotation, tout en assurant un crantage selon la même direction. Selon ce document, le codage et le crantage sont créés par le même effet magnétique entre le corps mobile et le corps fixe. Ainsi, ce document permet de résoudre l'ensemble des problématiques précitées. Toutefois, la solution proposée par ce document peut encore être améliorée.

### RÉSUMÉ DE L'INVENTION

La présente invention a pour but de proposer un codeur incrémental répondant à l'ensemble des besoins précités, tout en améliorant la solution proposée notamment par le document FR 3135791.

À cet effet, l'invention concerne un codeur magnétique incrémental définissant un axe de codeur et comprenant un corps fixe et un corps mobile par rapport au corps fixe selon au moins une première direction de codage et une deuxième direction de codage perpendiculaire à la première direction de codage ;
l'un des corps, dit premier corps, comprenant :
   - un premier anneau s'étendant selon une première direction longitudinale confondue avec l'axe de codeur et une première direction circonférentielle perpendiculaire à la première direction longitudinale, l'une desdites premières directions correspondant à la première direction de codage, le premier anneau définissant au moins deux alternances magnétiques différentes, chaque alternance magnétique s'étendant selon la première direction de codage ;
**l'autre corps,** dit deuxième corps, comprenant :
   - au moins une première dent de crantage en matériau ferromagnétique ou magnétique apte à être disposée en regard de chaque alternance magnétique du premier anneau pour créer, lors d'un mouvement du corps mobile selon la première direction de codage, un crantage selon au moins deux pas de crantage différents en fonction de la position du deuxième corps par rapport au premier corps selon la deuxième direction de codage ;
   - une première paire de détecteurs magnétiques disposés en regard du premier anneau et configurés pour quantifier chaque mouvement du corps mobile selon la première direction de codage.

Muni de ces caractéristiques, le codeur selon l'invention permet en effet de mettre en œuvre un codage selon l'une des directions choisies, tout en assurant un crantage selon la même direction. Le codage et le crantage sont créés par le même effet magnétique entre le corps mobile et le corps fixe. En outre, le codeur selon l'invention permet de mettre en œuvre des pas de crantage différents selon la première direction de codage en fonction de la position respective des corps selon la deuxième direction de codage. Ainsi, à chaque position respective des corps selon la deuxième direction de codage, il est possible d'associer une fonction avec un pas de crantage qui lui est propre. Par exemple, les fonctions associées aux positions différentes des corps peuvent correspondre à des différentes précisions de réglage de valeurs numériques introduites par l'intermédiaire du codeur. Ces précisions peuvent par exemple correspondre à des réglage fins, moyens et grossiers. Ainsi, l'utilisation d'un tel codeur devient particulièrement commode et intuitive.

Par « alternance magnétique », on entend une succession d'éléments ferromagnétiques ou magnétiques alternant leur direction de magnétisation selon une règle prédéterminée.

Selon certains modes de réalisation, chaque alternance magnétique est définie par un pas d'alternance constant.

Ainsi, il est possible d'assurer un pas de crantage constant selon la direction de codage correspondante.

Selon certains modes de réalisation :
- le premier corps comprend en outre un deuxième anneau s'étendant selon une deuxième direction longitudinale confondue avec l'axe de codeur et une deuxième direction circonférentielle perpendiculaire à la deuxième direction longitudinale, l'une desdites deuxièmes directions correspondant à la deuxième direction de codage, le deuxième anneau définissant une alternance magnétique unique s'étendant selon la deuxième direction de codage ;
- le deuxième corps, comprenant :
   + au moins une deuxième dent de crantage en matériau ferromagnétique ou magnétique disposée en regard du deuxième anneau pour créer un crantage selon un même pas de crantage lors d'un mouvement du corps mobile selon la deuxième direction de codage ;
   + une deuxième paire de détecteurs magnétiques disposés en regard du deuxième anneau et configurés pour quantifier chaque mouvement du corps mobile selon la deuxième direction de codage.

Grâce à ces caractéristiques, il est possible d'assurer un crantage selon chaque direction de codage.

Selon certains modes de réalisation, la deuxième direction de codage correspond à une translation le long de l'axe de codeur selon une longueur de course en translation prédéterminée et la première direction de codage correspond à une rotation autour de l'axe de codeur.

Grâce à ces caractéristiques, il est possible d'assurer des pas de crantage en rotation différents en fonction de la position du corps mobile en translation. Ainsi, pour utiliser le codeur, l'opérateur peut d'abord effectuer un mouvement en translation pour sélectionner la position souhaitée et puis, faire un mouvement rotatif dont le pas de crantage dépend de la position en translation sélectionnée. Un pas de crantage en rotation par défaut peut être également associé lorsqu'aucun mouvement en translation n'est effectué.

Selon certains modes de réalisation, le premier anneau comprend une pluralité d'anneaux élémentaires disposés de manière coaxiale l'un à côté de l'autre selon la deuxième direction de codage, au moins deux anneaux élémentaires définissant les deux alternances magnétiques différentes.

**Grâce à ces** caractéristiques, il est possible d'atteindre au moins deux alternances magnétiques différentes de manière simple.

Selon certains modes de réalisation, le premier anneau comprend au moins trois anneaux élémentaires disposés de manière coaxiale l'un à côté de l'autre selon la deuxième direction de codage, les anneaux élémentaires définissant au moins trois alternances magnétiques différentes avec un pas d'alternance croissant ou décroissant selon la deuxième direction de codage.

Grâce à ces caractéristiques, il est possible d'obtenir au moins trois pas de crantage différents en rotation en fonction de la position du corps mobile en translation.

Selon certains modes de réalisation, le deuxième anneau comprend une pluralité d'anneaux élémentaires disposés de manière coaxiale l'un à côté de l'autre pour définir l'alternance magnétique selon la deuxième direction de codage ;
la largeur de chaque anneau élémentaire du premier anneau est inférieure ou égale à la largeur de chaque paire d'anneaux élémentaires du deuxième anneau.

Selon certains modes de réalisation :
- le deuxième anneau définit au moins un cran central et deux crans périphériques ;
- une position stable en translation étant définie lorsque la deuxième dent de crantage est disposée en regard du cran central.

Grâce à ces caractéristiques, il est possible d'obtenir une position stable en translation du corps mobile et au moins deux positions périphériques. Chaque position périphérique peut être atteinte en appuyant sur le corps mobile ou en tirant celui-ci (principe « PUSH/PULL »). Des pas de crantage différents en rotation peuvent alors être associés à chacune de ces positions. En fonction de différents modes de réalisation, les positions périphériques peuvent être stables ou instables.

Selon certains modes de réalisation, la surface de la ou de chaque dent de crantage présente une étendue inférieure ou égale au plus petit pas de crantage de l'anneau correspondant.

Grâce à ces caractéristiques, la dent de crantage présente une sensibilité suffisante pour assurer tout pas de crantage.

Selon certains modes de réalisation, les détecteurs magnétiques de la première même paire de détecteurs sont décalés l'un de l'autre d'une fraction du plus petit pas de crantage.

Grâce à ces caractéristiques, il est possible de détecter efficacement chaque mouvement du corps mobile correspondant à un pas de crantage.

Selon certains modes de réalisation, lequel le premier corps est le corps mobile et le deuxième corps est le corps fixe.

Grâce à ces caractéristiques, notamment les dents de crantage et les détecteurs magnétiques sont disposés dans le corps fixe. Ainsi, l'arrangement de ces éléments ainsi que leur câblage éventuel peuvent être significativement simplifiés.

Selon certains modes de réalisation, le codeur comprenant en outre :
- un fluide magnéto-rhéologique dans un espace formé entre le premier corps et le deuxième corps ;
- une boucle magnétique configurée pour former un champ magnétique au moins dans une partie dudit espace et pour modifier l'intensité de ce champ magnétique en fonction de la position du deuxième corps par rapport au premier corps selon la deuxième direction de codage.

Grâce à ces caractéristiques, il est possible de modifier le couple de crantage selon la première direction de codage. En effet, chaque modification de l'intensité du champ magnétique créé par la boucle magnétique modifie la viscosité du fluide magnéto-rhéologique.

### DESCRIPTION DES FIGURES

Ces caractéristiques et avantages de l'invention apparaitront à la lecture de la description qui va suivre donnée uniquement à titre d'exemple et non limitatif, et faite en référence aux dessins annexés, sur lesquels :
- [Fig.1] la figure 1 est une vue schématique en perspective d'un codeur magnétique selon un premier mode de réalisation de l'invention, le codeur étant fixé partiellement derrière un panneau formant une planche de bord ;
- [Fig.2] la figure 2 est une vue en perspective éclatée du codeur de la figure 1, le codeur comprenant un corps fixe et un corps mobile ;
- [Fig.3] la figure 3 présente une vue partielle d'une coupe selon le plan longitudinal III de la figure 1 et de trois autres coupes le long de l'axe de codeur de la figure 1 ;
- [Fig.4] la figure 4 est une vue en perspective des éléments internes fonctionnels du corps fixe et du corps mobile de la figure 2 ;
- [Fig.5] la figure 5 est une vue en perspective du corps mobile de la figure 2 ;
- [Fig.6] la figure 6 est une vue en perspective en coupe du corps mobile inséré dans le corps fixe de la figure 2 ;
- [Fig.7] la figure 7 est une vue schématique en perspective d'un codeur selon un deuxième mode de réalisation de l'invention, le codeur étant fixé sur un panneau formant une planche de bord tout en restant devant ce panneau ;
- [Fig.8] la figure 8 est une vue en perspective éclatée du codeur de la figure 7 ; et
- [Fig.9] la figure 9 est une vue analogue à celle de la figure 3, le codeur magnétique étant selon un troisième mode de réalisation.

### DESCRIPTION DÉTAILLÉE DE L'INVENTION

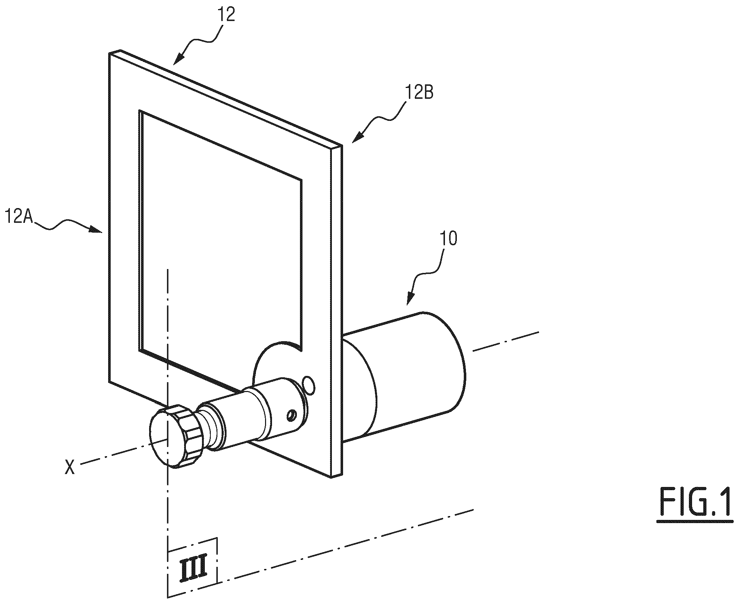

La figure 1 illustre en effet un codeur magnétique incrémental 10 selon un premier mode de réalisation de l'invention. De préférence, le codeur 10 est monté dans un cockpit permettant de piloter un aéronef.

Par « aéronef », on entend tout engin volant, tel qu'un avion, un hélicoptère ou un drone par exemple. Un tel aéronef peut être piloté directement à partir de celui-ci. Dans un tel cas le cockpit est avantageusement arrangé à l'intérieur de l'aéronef. Selon un autre exemple de réalisation, un tel aéronef est contrôlé à distance. Dans un tel cas, le cockpit est disposé à distance de l'aéronef et présente par exemple une station au sol. Dans tous les cas, l'aéronef est configuré pour être piloté par un opérateur, par exemple par un pilote à partir du cockpit disposé à l'intérieur de l'aéronef.

Selon l'invention, le codeur 10 permet à l'opérateur de contrôler au moins une fonctionnalité avionique. Par exemple, un tel codeur 10 peut être utilisé par l'opérateur pour contrôler un système avionique et fait partie d'un système de contrôle d'un tel système avionique. En variante, le codeur 10 fait partie d'un système de contrôle de plusieurs systèmes avioniques. Par exemple, le codeur 10 selon l'invention fait partie d'un système dit « Flight Control Unit » (FCU) ou « Integrated Standby Instrument System » (ISIS) ou « Closer Control Device » (CCD) ou « Keyboard Cursor Control Device » (KCCD), etc.

Dans l'exemple de la figure 1, le codeur 10 est intégré partiellement dans un panneau 12. Ce panneau 12 forme par exemple une planche de bord du cockpit de l'aéronef pour l'un des systèmes de contrôle précité. Dans l'exemple de la figure 1, le codeur 10 est arrangé partiellement dans la partie avant 12A du panneau 12 et partiellement dans la partie arrière 12B de ce panneau 12. En particulier, dans l'exemple de la figure 1, la partie avant 12A du panneau 12 est orientée vers l'opérateur alors que la partie arrière 12B de ce panneau est orientée vers la partie interne de la planche de bord. Bien entendu, d'autres exemples d'arrangement du codeur 10 par rapport au panneau 12 ou par rapport à tout autre moyen de fixation sont également possibles.

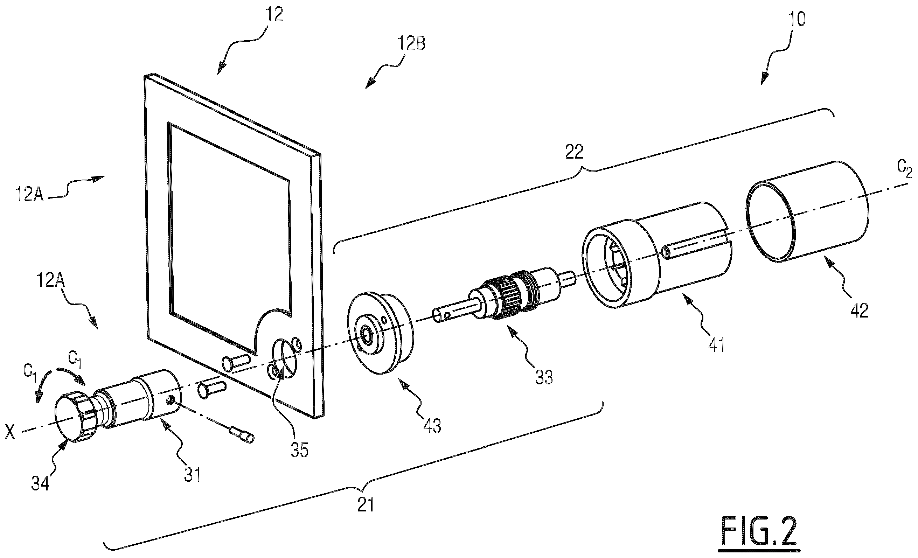

En référence à la figure 2, le codeur 10 comprend un corps mobile 21, appelé également dans l'exemple de cette figure premier corps, et un corps fixe 22, appelé également dans l'exemple de cette figure deuxième corps.

Le corps mobile 21 comprend un bouton 31 et un rotor 33.

Le bouton 31 fait saillie par rapport au panneau 12 et est arrangé dans la partie avant 12A de ce panneau 12. Le bouton 31 est mobile en translation le long d'un axe de codeur X et en rotation autour de l'axe de codeur X. Plus particulièrement, le bouton 31 est mobile selon une première direction de codage C1 qui correspond dans cet exemple à la direction de rotation autour de l'axe de codeur X et une deuxième direction de codage C2 qui correspond dans cet exemple à la direction de translation selon l'axe de codeur X. Avantageusement, le bouton 31 est mobile dans chaque sens selon chaque direction de codage C1, C2. En particulier, dans la direction de rotation, le bouton 31 est mobile en rotation dans le sens horaire et antihoraire, et dans la direction de translation, le bouton 31 est mobile dans le sens vers la planche de bord et vers l'opérateur. Avantageusement, le bouton 31 définit notamment une surface de bouton 34 qui est destinée à être orientée vers l'opérateur. Cette surface 34 représente donc une surface extérieure du bouton 31 qui est visible par l'opérateur et peut être saisie par l'opérateur.

Le rotor 33 s'étend selon l'axe de codeur X de sorte à former sur l'une de ses extrémités une liaison solidaire avec le bouton 31. Ainsi, tout comme le bouton 31, le rotor 33 est mobile selon la première direction de codage C1 et selon la deuxième direction de codage C2 dans chaque sens de mouvement précité. Le rotor 33 reçoit des éléments internes fonctionnels du corps mobile 21 qui seront expliqués plus en détail par la suite.

Le corps fixe 22 comprend un support 41, un capot 42 et une flasque 43.

La flasque 43 est par exemple disposée dans un trou passant 35 du panneau 12 et permet de supporter le bouton 31 et le rotor 33. Dans l'exemple de la figure 2, la flasque 43 est fixée sur le panneau 12 tout en restant dans la partie arrière 12B de celui-ci, en utilisant par exemple des vis accessibles à partir de la partie avant 12B du panneau 12.

Le support 41 reçoit des éléments internes fonctionnels du corps fixe 22 qui sont destinés à coopérer avec les éléments internes fonctionnels du corps mobile 21 comme cela sera expliqué plus en détail par la suite. En particulier, et comme cela sera apparent par la suite, les éléments internes fonctionnels du corps fixe 22 sont maintenus par le support 41 à distance par rapport à ceux du corps mobile 21. Pour ce faire, le support 41 est configuré pour recevoir au moins partiellement le rotor 33 avec les éléments internes fonctionnels du corps mobile 21 portés par ce rotor 33.

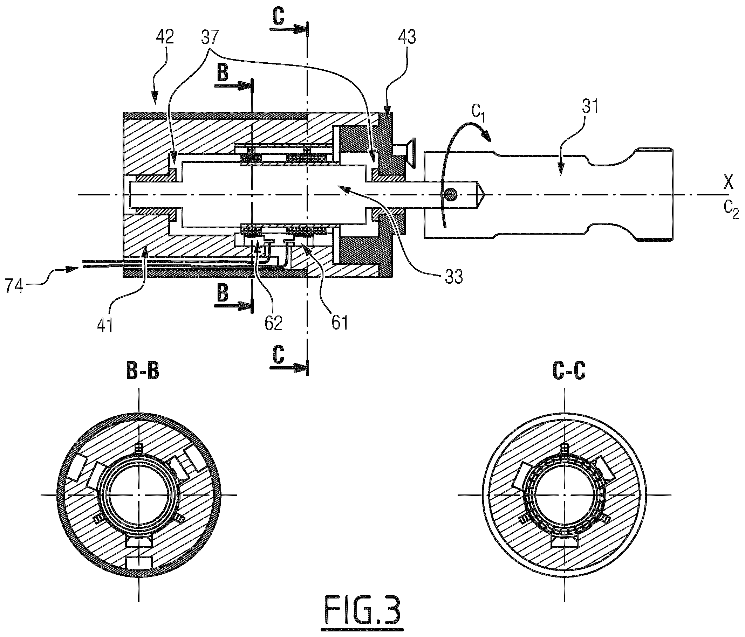

Le support 41 est par exemple relié au corps mobile 21 via une liaison mobile dans chaque direction de codage. Cette liaison peut par exemple être formée à chaque extrémité du rotor 33 et présenter des paliers lisses, par exemple des paliers en polymère ou paliers bronze frittés. Ces paliers sont préférentiellement à collerette pour servir de butée mécanique. Selon un autre exemple, ces paliers sont des paliers à élément roulant tel que douille à billes. La figure 3 fait notamment apparaitre les paliers 37 reliant le rotor 33 au deuxième corps 22. Dans l'exemple de cette figure, les paliers 37 relient une extrémité du rotor 33 directement au support 41 et l'autre extrémité du rotor 33 au support 41 via la flasque 43. Dans cet exemple, la flasque 43 est configurée pour coopérer avec le support 41 afin de le fixer au panneau 12

Le capot 42 est destiné à protéger l'ensemble des composants du codeur 10 qui sont disposés dans la partie arrière 12B du panneau 12.

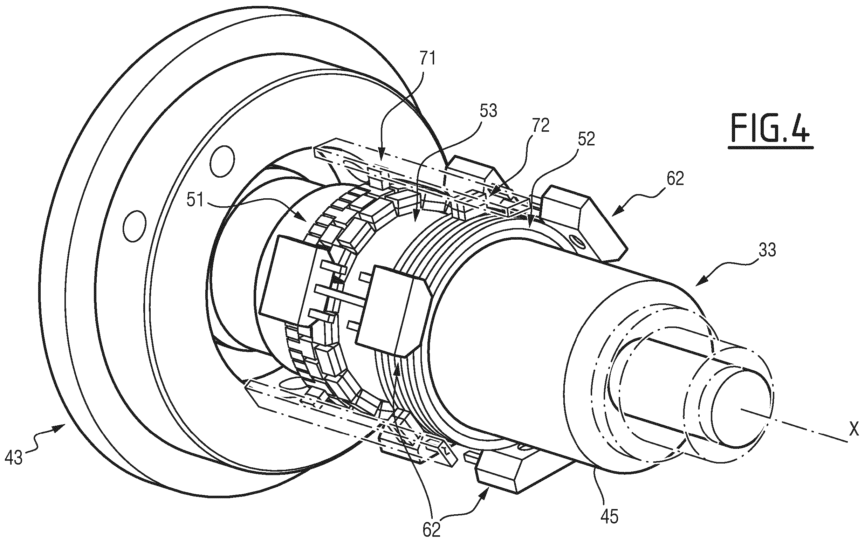

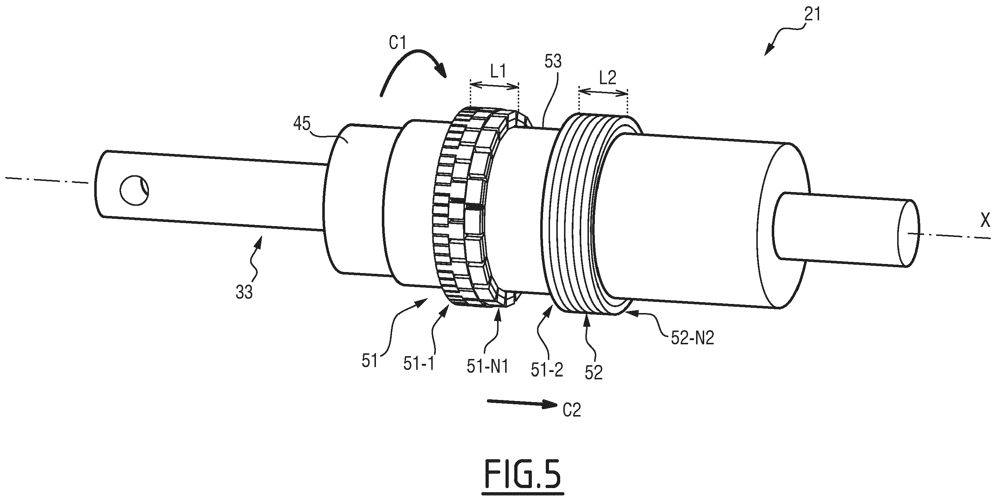

Dans l'exemple des figures 4 et 5 illustrant plus en détail les éléments internes fonctionnels du corps fixe 22 et du corps mobile 21, le rotor 33 présente par exemple un arbre 45 de forme cylindrique s'étendant selon l'axe de codeur X.

En référence à ces figures 4 et 5, les éléments internes fonctionnels du corps mobile 21 comprennent un premier anneau 51, dit anneau de rotation, et un deuxième anneau 52, dit anneau de translation. Chacun de ces anneaux 51, 52 est fixé sur l'arbre 45 le long de l'axe de codeur X et reste espacé de l'autre anneau 51, 52. Dans certains modes de réalisation, les anneaux 51, 52 sont reliés entre eux par une pièce 53 magnétique ou ferromagnétique permettant d'améliorer l'efficacité du codeur (couple et force de crantage plus important pour sans augmenter la taille des aimants fixe) et d'éviter les fuites de champs et les émissions parasites externes. Cette pièce 53 présente par exemple un manchon ou un tube inséré sur l'arbre 45, les deux anneaux 51, 52 étant fixés sur cette manche.

En outre, chacun de ces anneaux 51, 52 présente une ou plusieurs alternances magnétiques axiales dans le cas de l'anneau de translation 52 et circonférentielle dans le cas de l'anneau de rotation 51.

Dans l'exemple des figures 4 et 5, l'anneau de translation 52 présente une seule alternance magnétique axiale. En particulier, cet anneau de translation 52 s'étend selon l'axe de codeur X et présente une pluralité d'anneaux élémentaires 52-1, ..., 52-N2 disposés l'un à côté de l'autre, par exemple par collage. Chaque anneau élémentaire 52-1, ... , 52-N2 est par exemple réalisé en un seul bloc ou à partir de plusieurs aimants parallélépipédiques ou d'aimants en arc de cercle. Un tel anneau élémentaire peut également être issu d'un « polyaimants » ou d'un « aimant programmable » nommé Polymagnets^{®}.

Afin d'atteindre une alternance magnétique axiale, dans l'exemple de la Figure 5, ces anneaux élémentaires 52-1, ..., 52-N2 présentent une aimantation radiale et sont disposés l'un à côté de l'autre de sorte que les anneaux adjacents soient magnétisés dans les sens opposés selon la direction radiale. Selon un autre exemple de disposition possible, une alternance magnétique axiale est atteinte en utilisant un arrangement de type Halbach. En particulier, selon un tel type d'arrangement, les anneaux élémentaires sont magnétisés alternativement selon la direction radiale et circonférentielle. Par ailleurs, le sens de la magnétisation de chaque anneau élémentaire est choisi de sorte à concentrer le champ magnétique sur la surface de l'anneau de translation 52 en regard des éléments internes fonctionnels du corps fixe 22. Dans l'exemple de l'arrangement respectif du corps mobile 21 et du corps fixe 22 de la figure 2, un tel champ magnétique est concentré sur la surface extérieure de l'anneau de translation 52.

L'anneau de translation 52 présente une largeur L2 correspondant à son étendue selon l'axe de codeur X. Cette largeur L2 est formée d'une somme des largeurs des anneaux élémentaires 52-1, ..., 52-N2 formant cet anneau de translation 52. La largeur de chaque anneau élémentaire ou de chaque paire d'anneaux élémentaires forme un pas de crantage en translation. Selon un exemple de réalisation, les anneaux élémentaires présentent une même largeur. Dans un tel cas, l'anneau de translation 52 présente un pas de crantage en translation homogène.

Dans l'exemple des figures 4 et 5, le nombre N2 d'anneaux élémentaires 52-1, ..., 52-N2 est égal à 6. Autrement dit, ces anneaux élémentaires forment 3 paires d'anneaux, chaque paire étant composée d'anneaux adjacents ayant des magnétisations différentes. Parmi ces paires d'anneaux élémentaires, une paire d'anneaux élémentaires est disposée entre les deux autres paires et est alors appelée paire centrale. Les deux autres paires sont appelées paires périphériques. La paires centrale présente alors un cran central et les paires périphériques présentent des crans périphériques.

L'anneau de rotation 51 s'étend également selon l'axe de codeur X et présente une largeur L1 correspondant à son étendue longitudinale. Avantageusement, la largeur L1 est sensiblement également à la largeur L2 de l'anneau de translation 52. Dans certains autres exemples, la largeur L1 est par exemple sensiblement inférieure à la largeur L2. L'anneau de rotation 51 est par exemple de même diamètre que l'anneau de translation 52.

Selon l'invention, l'anneau de rotation 51 présente une pluralité d'alternances magnétiques circonférentielles ayant des pas d'alternance différents. Pour ce faire, l'anneau de rotation 51 présente une pluralité d'anneaux élémentaires 51-1, ..., 51-N1 disposés l'un à côté de l'autre selon l'axe de codeur X. Au moins deux anneaux élémentaires 51-1, ..., 51-N1 présentent des alternances magnétiques circonférentielles différentes et donc des pas d'alternance différents. Avantageusement, tous les anneaux élémentaires 51-1, ..., 51-N1 présentent des alternances magnétiques circonférentielles différentes et donc des pas d'alternance différents.

L'alternance magnétique circonférentielle de chaque anneau élémentaire 51-1, ..., 51-N1 formant l'anneau de rotation 51 est atteinte par une disposition particulière d'une pluralité de pièces élémentaires formant cet anneau élémentaire 51-1, ..., 51-N1, chaque pièce élémentaire présentant par exemple un aimant permanent. Chaque pièce élémentaire peut par exemple présenter une forme sensiblement parallélépipédique qui est allongée selon l'axe de codeur X. Cette forme peut par exemple être légèrement incurvée afin de former un arc de cercle autour de l'axe de codeur X. Les pièces élémentaires sont disposées l'une à côté de l'autre par exemple par collage selon la direction circonférentielle. L'étendue circonférentielle de chaque pièce élémentaire forme un pas d'alternance formant également un pas de crantage en rotation. Il s'agit d'un pas d'alternance homogène lorsque l'ensemble des pièces élémentaires présentent une même étendue circonférentielle. Comme dans le cas des anneaux élémentaires 52-1, ..., 52-N2 de l'anneau de translation 52, chaque pièce élémentaire est par exemple réalisée en un seul bloc ou à partir de plusieurs aimants parallélépipédiques ou d'aimants en arc de cercle. Une telle pièce élémentaire peut également être issue d'un « polyaimants » ou d'un « aimant programmable » nommé Polymagnets^{®}.

Les pièces élémentaires d'un même anneau élémentaire 51-1, ..., 51-N1 de l'anneau de rotation 51 présentent une aimantation radiale et sont disposés l'une à côté de l'autre de sorte que les pièces élémentaires adjacentes soient magnétisées dans les sens opposés selon la direction radiale. Selon un autre exemple de disposition possible, une alternance magnétique circonférentielle est atteinte en utilisant un arrangement de type Halbach. En particulier, selon un tel type d'arrangement, les pièces élémentaires sont magnétisées alternativement selon la direction radiale et circonférentielle. Par ailleurs, comme dans le cas précédent, le sens de la magnétisation de chaque pièce élémentaire est choisi de sorte à concentrer le champ magnétique sur la surface de l'anneau de rotation 51 en regard des éléments internes fonctionnels du corps fixe 22. Dans l'exemple de l'arrangement respectif du corps mobile 21 et du corps fixe 22 de la figure 2, un tel champ magnétique est concentré sur la surface extérieure de l'anneau de rotation 51.

Pour assurer des pas d'alternance différents entre les différents anneaux élémentaires 51-1, ..., 51-N1 de l'anneau de rotation 51, les pièces élémentaires de ces différents anneaux élémentaires 51-1, ... , 51-N1 présentent des étendues circonférentielles différentes. Entre les différents anneaux élémentaires 51-1, ..., 51-N1, ces étendues circonférentielles peuvent progressivement diminuer ou augmenter suivant l'axe de codeur X. Ainsi, les pas d'alternance et en conséquence les pas de crantage des anneaux élémentaires 51-1, ..., 51-N1 de l'anneau de rotation 51 diminuent ou augmentent progressivement selon l'axe de codeur X. Ainsi, dans l'exemple des figures 4 et 5, le nombre N1 d'anneaux élémentaires 51-1, ... , 51-N1 est égal 3 et trois pas de crantage sont définis, à savoir fin, moyen et grossier. Autrement dit, dans cet exemple, le pas de crantage diminue progressivement suivant l'axe de codeur X.

Avantageusement, les anneaux élémentaires 51-1, ..., 51-N1 de l'anneau de rotation 51 présentent tous une même largeur. Ainsi, la largeur de chaque anneau élémentaire 51-1, ..., 51-N1 de l'anneau de rotation 51 est par exemple égale à la largeur de chaque paire d'anneaux élémentaires 52-1, ..., 52-N2 de l'anneau de translation 52. Autrement dit, la largeur de chaque anneau élémentaire 51-1, ..., 51-N1 de l'anneau de rotation 51 est deux fois supérieure à la largeur de chaque anneau élémentaire 52-1, ..., 52-N2 de l'anneau de translation 52. Selon un autre exemple de réalisation, la largeur de chaque anneau élémentaire 51-1, ..., 51-N1 de l'anneau de rotation 51 est inférieure à la largeur de chaque paire d'anneaux élémentaires 52-1, ..., 52-N2 de l'anneau de translation 52.

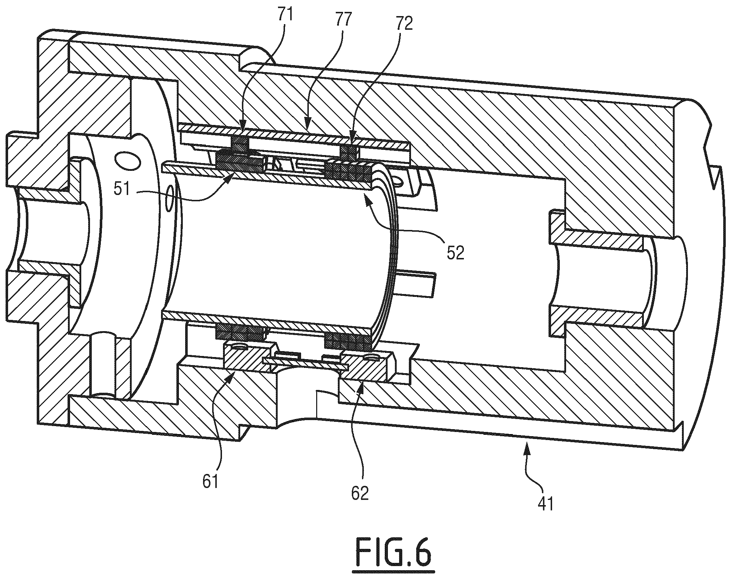

En référence aux figures 4 et 6, les éléments internes fonctionnels du corps fixe 22 comprennent au moins une paire de détecteurs magnétiques de translation 62 appelés également deuxièmes détecteurs magnétiques, au moins une paire de détecteurs magnétiques de rotation 61, appelés également premiers détecteurs magnétiques, une pluralité de dents de crantage en translation 72, appelées également deuxièmes dents de crantage, et une pluralité de dents de crantage en rotation 71, appelées également premières dents de crantage. Ces éléments 61, 62, 71, 72 sont fixés sur une surface intérieure du support 41 (non-représenté sur la figure 4) du corps fixe 22. En outre, comme mentionné précédemment, ces éléments 61, 62, 71, 72 sont maintenus à distance des anneaux 51 et 52 correspondants.

Les détecteurs magnétiques de translation 62 sont disposés en regard de l'anneau de translation 52 et permettent de quantifier le déplacement de cet anneau 52 le long de l'axe de codeur X. Autrement dit, ces détecteurs 62 permettent de coder chaque déplacement de l'anneau de translation 52 le long de l'axe de codeur X en détectant des changements dans le flux magnétique grâce à l'alternance magnétique axiale des anneaux élémentaires constituant cet anneau de translation 52. Par exemple, les détecteurs de translation 62 sont décalés l'un de l'autre d'une fraction du pas de crantage en translation défini par cet anneau de translation 52. Avantageusement, le nombre de détecteurs de translation 62 est égal à 3. Ces détecteurs de translation 62 sont par exemple espacés de manière homogène selon la direction circonférentielle.

Les détecteurs magnétiques de rotation 61 sont disposée en regard de l'anneau de rotation 51. Les détecteurs de rotation 61 permettent de quantifier chaque mouvement rotatif de l'anneau de rotation 51 autour de l'axe de codeur X en détectant des changements dans le flux magnétique grâce à l'alternance magnétique circonférentielle mise en œuvre par les pièces élémentaires de chaque anneau élémentaire 51-1, ..., 51-N1 constituant l'anneau de rotation 51. Par exemple, les détecteurs magnétiques 61 sont décalés d'une fraction du plus petit pas de crantage en rotation défini par l'anneau de rotation 51. Avantageusement, le nombre de détecteurs de rotation 61 est égal à 3. Ces détecteurs de rotation 61 sont par exemple espacés de manière homogène selon la direction circonférentielle.

Chaque détecteur magnétique 61, 62 présente par exemple un capteur à effet Hall ou un capteur magnéto-résistif ou un solénoïde. En outre, chaque détecteur magnétique 61, 62 est relié à un contrôleur externe du codeur 10 par des câbles 74 visibles sur la figure 3.

Chaque dent de crantage en translation 72 est disposée en regard de l'anneau de translation 52. En particulier, chaque dent de crantage en translation 72 présente une surface qui est orientée vers l'anneau de translation 52 et présente une dimension inférieure ou égale au pas de crantage en translation. Une telle surface présente par exemple une étendue longitudinale qui est inférieure ou égale au pas de crantage de cet anneau 52. En outre, chaque dent de crantage en translation 72 est faite d'un matériau ferromagnétique ou magnétique tel qu'un acier inoxydable série 400. Chaque dent de crantage en translation 72 est préférentiellement un aimant ou une pluralité d'aimants disposés l'un à côté de l'autre. Chaque aimant est par exemple un aimant parallélépipédique ou un aimant en arc de cercle. Un tel aimant est par exemple issu d'un « polyaimants » ou d'un « aimant programmable » nommé Polymagnets^{®}.

Dans l'exemple de la figure 4, lorsque l'anneau de translation 52 est constitué d'une paire centrale d'anneaux élémentaires et de deux paires périphériques, chaque dent de crantage en translation 72 définit une position stable dans laquelle elle est disposée en regard de la paire centrale. Pour assurer une telle position stable, chaque dent de crantage en translation 72 comprend par exemple une paire d'aimants disposés l'un à côté de l'autre selon l'axe de codeur X et présentant des magnétisations de sens opposés à ceux de la surface extérieure de la paire centrale d'anneaux élémentaires.

Dans certains modes de réalisation, une position stable de chaque dent de crantage en translation 72 est également formée lorsque cette dent de crantage en translation 72 est disposée en regard de l'une des paires périphériques d'anneaux élémentaires, avantageusement en regard de chaque paire périphérique d'anneaux élémentaires. Dans un tel cas, chaque déplacement du corps mobile 21 selon l'axe de codeur X entre les différentes positions stables peut alors être effectué par l'opérateur manuellement. En outre, de préférence, la largeur de chaque anneau élémentaire 51-1, ..., 51-N1 de l'anneau de rotation 51 est sensiblement égale à la largeur de chaque paire d'anneaux élémentaires 52-1, ..., 52-N2 de l'anneau de translation 52.

Dans certains autres modes de réalisation, une position instable de chaque dent de crantage en translation 72 est formée lorsque cette dent de crantage en translation 72 est disposée en regard de l'une des paires périphériques d'anneaux élémentaires, avantageusement en regard de chaque paire périphérique d'anneaux élémentaires. Dans un tel cas, une butée mécanique peut être pourvue selon chaque direction de mouvement du corps mobile 21 selon l'axe de codeur X. Cette butée mécanique permet d'empêcher chaque dent de crantage en translation 72 d'être alignée avec la paire périphérique d'anneaux élémentaires correspondante et d'atteindre ainsi une position magnétique stable. Dans un tel cas, le rappel du corps mobile 21 selon l'axe de codeur X d'une position instable à la position stable s'effectue magnétiquement. En outre, de préférence, la largeur de chaque anneau élémentaire 51-1, ..., 51-N1 périphérique de l'anneau de rotation 51 est sensiblement inférieure à la largeur de la paire périphérique correspondante d'anneaux élémentaires 52-1, ..., 52-N2 de l'anneau de translation 52.

Chaque dent de crantage en rotation 71 est disposée en regard de l'anneau de rotation 51. Comme dans le cas précédent, chaque dent de crantage en rotation 71 présente une surface orientée vers l'anneau de rotation 51 d'une dimension circonférentielle inférieure ou égale à celle du plus petit pas de crantage en rotation et d'une dimension axiale inférieure ou égale à la largeur de chaque anneau élémentaire 51-1, ..., 51-N1 constituant l'anneau de rotation 51. En outre, chaque dent de crantage en rotation 71 est faite d'un matériau ferromagnétique ou magnétique tel qu'un acier inoxydable série 400. Chaque dent de crantage en rotation 71 est préférentiellement un aimant. Chaque aimant est par exemple un aimant parallélépipédique ou un aimant en arc de cercle. Un tel aimant est par exemple issu d'un « polyaimants » ou d'un « aimant programmable » nommé Polymagnets^{®}.

Comme cela est illustré sur la figure 6, les dents de crantage associées aux anneaux différents 51, 52 sont avantageusement reliées entre elles par une pièce de raccordement 77. Cette pièce de raccordement 77 est par exemple une pièce magnétique ou ferromagnétique, et s'étend avantageusement selon l'axe de codeur X.

Avantageusement, lorsque les dents de crantage en translation 72 se trouvent en regard de la paire centrale d'anneaux élémentaires de l'anneau en translation 52, les dents de crantage en rotation 71 se trouvent en regard de l'anneau élémentaire central de l'anneau de rotation 51. Ainsi, dans cette position, un pas de crantage en rotation moyen est appliqué lors d'un mouvement rotatif. Lorsque les dents de crantage en translation 72 se trouvent en regard de l'une des paires périphériques d'anneaux élémentaires de l'anneau en translation 52 suite à un mouvement en translation du corps mobile (PUSH ou PULL), un pas de crantage en rotation fin ou grossier est appliqué lors d'un mouvement rotatif successif.

Par ailleurs, dans l'exemple de la figure 4, une pluralité de dents de crantage 71, 72 est associée à chacun des anneaux 51, 52. En particulier, dans l'exemple de cette figure, trois dents de crantage sont associées à chacun des anneaux. De manière générale, pour améliorer l'équilibre du codeur et éviter des couple ou effort parasite, il préférable d'avoir au moins deux dents de crantage associées à chacun des anneaux et réparties de manière équidistante suivant la direction circonférentielle.

Avantageusement, selon l'invention, lorsqu'une telle pluralité de dents de crantage est associée à un anneau, les dents de crantage sont disposées de manière équidistante selon la direction circonférentielle de l'anneau 51, 52 correspondante. Il doit être également compris qu'une seule dent de crantage pour chaque anneau serait suffisante afin d'assurer une fonction de crantage selon la direction correspondante.

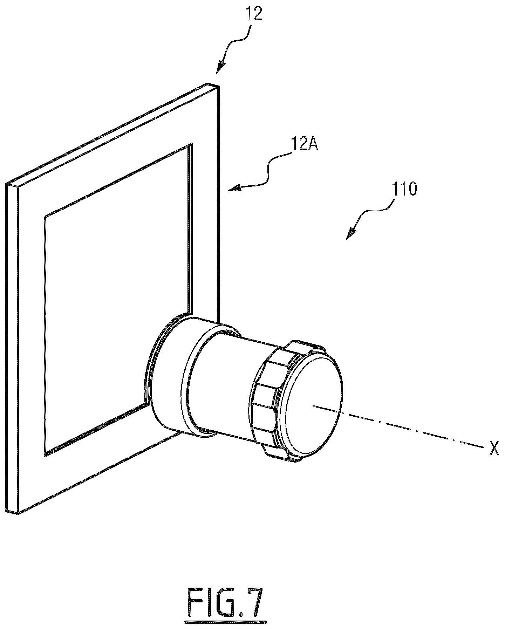

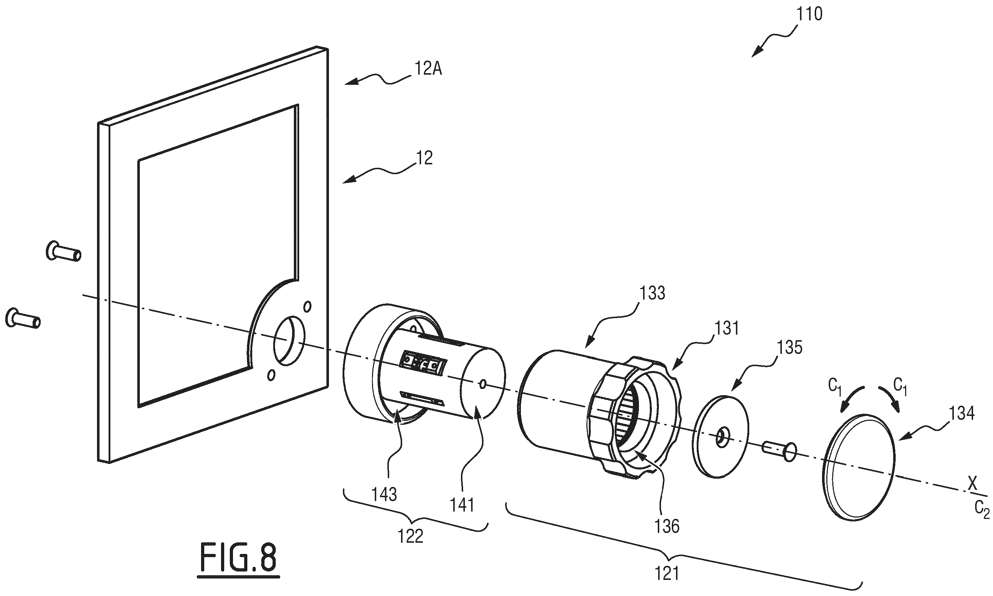

Le codeur 110 selon un deuxième mode de réalisation sera désormais expliqué en référence aux figures 7 et 8. L'application de ce codeur 110 est par exemple identique à celle du codeur 10 expliqué précédemment.

La différence principale du codeur 110 selon le deuxième mode de réalisation consiste en la manière de sa disposition par rapport au panneau 12. En effet, comme cela est illustré sur la figure 7, le codeur 110 selon le deuxième mode de réalisation est disposé entièrement dans la partie avant 12A du panneau 12.

Comme cela est illustré sur la figure 8, tout comme le codeur 10 selon le premier mode de réalisation, le codeur 110 selon le deuxième mode de réalisation comprend un corps mobile 121, appelé également premier corps, et un corps fixe 122, appelé également deuxième corps.

Le corps fixe 122 est fixé par exemple directement sur la partie avant 12A du panneau 12. Comme dans le cas précédent, le corps fixe 122 comprend un support 141 recevant les éléments internes fonctionnels de ce corps fixe 122 comme cela sera expliqué plus en détail par la suite. Le support 141 peut comprendre en outre une butée mécanique 143 intégrée dans l'une de ses extrémités.

Comme dans le cas précédent, le corps mobile 121 comprend également un bouton 131 et un rotor 133 qui est par exemple solidaire avec le bouton 131 disposé sur son extrémité. La même extrémité du rotor 133 est par exemple fermée par un capot 134 présentant une surface orientée vers l'opérateur. Le capot 134 est relié au rotor 133. Une rondelle 135 est solidaire avec le corps fixe 122 à son extrémité. Cette rondelle 135 peut présenter une butée mécanique lors de la rotation ou de la translation du corps mobile 121. Cette butée mécanique peut être amortie via un ressort de rappel ou une pièce en élastomère (exemple de matériau : EPDM). Par ailleurs, cette butée peut être également magnétique. Dans ce cas, cette butée peut être réalisée en plaçant un aimant solidaire du corps fixe en en répulsion et au regard avec un aimant solidaire du corps mobile. Cette butée magnétique est intrinsèquement amortie. Cette butée magnétique peut être indépendante ou être une partie de l'un des anneaux (dans une logique d'optimisation du nombre de pièces). Par exemple, dans le cas d'un anneau du corps mobile utilisant un arrangement de type Halbach, un aimant du corps fixe peut être placé en répulsion et au regard de l'extrémité de cette anneau ayant localement une aimantation axiale ou circonférentielle. En outre, à chacune de ses extrémités, le rotor 133 peut présenter des paliers 136 destinés à coopérer avec le corps fixe 122 afin d'assurer le mouvement du corps mobile 121 selon chacune des directions de codage, à savoir une première direction de codage C1 correspondant à la direction de rotation autour de cet axe de codeur X et une deuxième direction de codage C2 correspondant à la direction de translation le long de l'axe de codeur X, dans l'exemple des figures.

Contrairement au cas précédent, le rotor 133 est destiné à englober au moins partiellement le corps fixe 122. Autrement dit, le rotor 133 est destiné à être disposé autour du support 141 comme cela est visible sur la figure 8.

En outre, tout comme dans le cas précédent, le corps mobile 121 comprend un anneau de rotation, appelé également premier anneau, et un anneau de translation, appelé également deuxième anneau. Ces anneaux sont similaires respectivement aux anneaux 51, 52 décrits précédemment. En particulier, l'anneau de translation peut présenter une seule alternance magnétique et l'anneau de rotation peut présenter plusieurs alternances magnétiques.

Contrairement au cas précédent, les anneaux de rotation et de translation selon le deuxième mode de réalisation sont disposés sur une surface intérieure du rotor 133 qui présente alors un arbre rotatif creux selon l'exemple de cette figure. Chacun de ces anneaux de rotation et de translation est fixé sur un arbre le long de l'axe de codeur X et reste espacé de l'autre anneau.

Également de manière analogue au cas précédent, le corps fixe 122 comprend une pluralité de paires de détecteurs magnétiques et une pluralité de dents de crantage, disposés en regard des anneaux de rotation et translation correspondants.

Contrairement au cas précédent, les éléments internes fonctionnels (i.e. les détecteurs magnétiques et les dents de crantage) du corps fixe 122 du codeur 110 selon le deuxième mode de réalisation, sont disposés sur une surface extérieure du support 141 ou au moins dans des fenêtres fermées sur cette surface. Ainsi, selon ce mode de réalisation, ces éléments sont disposés en regard des surfaces intérieures des anneaux correspondants. Autrement dit, selon ce mode de réalisation, les éléments internes fonctionnels du corps fixe 122 sont reçus à l'intérieur des anneaux tout en restant à distance par rapport à ceux-ci. Le fonctionnement et l'arrangement respectif de ces éléments internes sont analogues à ceux décrits précédemment en relation avec le premier mode de réalisation.

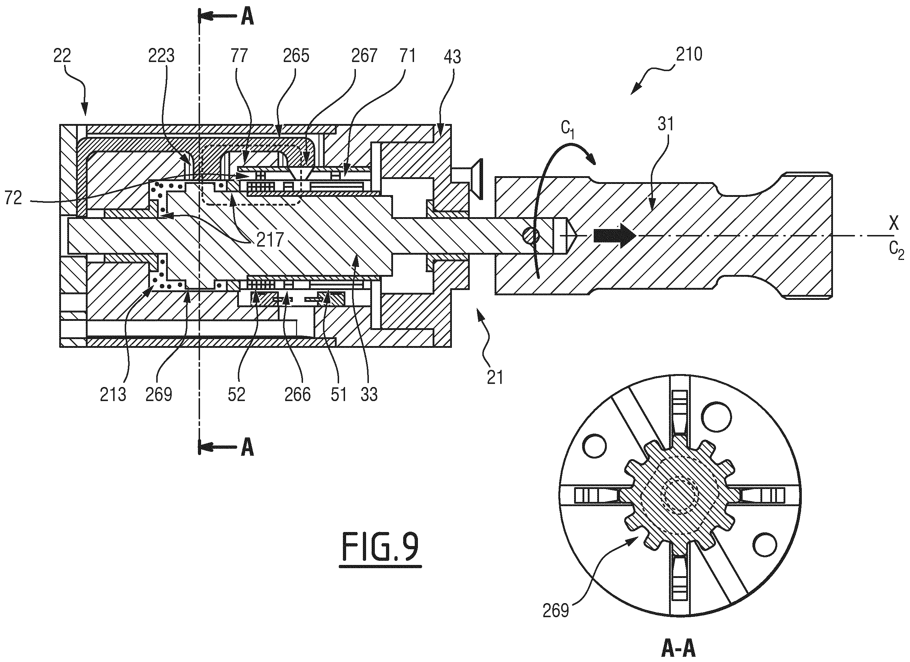

Le codeur 210 selon un troisième mode de réalisation sera désormais expliqué en référence à la figure 9. L'application et la structure de ce codeur 210 sont sensiblement analogues à celles du codeur 10 selon le premier mode de réalisation. En particulier, ce codeur 210 inclut l'ensemble des éléments du codeur 10 selon le premier mode de réalisation. Ces éléments communs seront dénotés par les même références numériques que ceux selon le premier mode de réalisation et ne seront pas décrits en détail en relation avec ce mode de réalisation. Il doit être toutefois compris qu'au moins certains de ces éléments peuvent être adaptés pour coopérer avec les éléments propres à ce mode de réalisation qui seront expliqués ci-dessous.

En référence à la figure 9, le codeur 210 selon le troisième mode de réalisation définit un espace 213 entre le corps mobile 21 et le corps fixe 22. Cet espace 213 est configuré pour être rempli d'un fluide magnéto-rhéologique.

En particulier, cet espace 213 est par exemple délimité par une partie d'une surface externe du rotor 33 et d'une surface d'une cavité du corps fixe 22 recevant le rotor 33. Cet espace 213 s'étend de manière circonférentielle autour du rotor 33 et de manière axiale selon l'axe de codeur X sensiblement entre les paliers 37 disposés sur une extrémité distale du rotor 33 et le deuxième anneau 52. Cette extrémité distale est opposée à celle recevant le bouton 31. L'espace 213 peut être délimité axialement par une paire de joints d'étanchéité 217.

De manière connue en soi, le fluide magnéto-rhéologique présente des suspensions de particules de quelques micromètres, voire quelques nanomètres, qui permettent de modifier la viscosité apparente du fluide en fonction de l'intensité d'un champ magnétique le traversant.

Selon ce mode de réalisation, la viscosité apparente du fluide magnéto-rhéologique est modifié pour modifier le couple de crantage selon la première direction de codage C1, c'est-à-dire selon la direction de rotation du rotor 33. Par exemple, suivant différents exemples de réalisation, le changement de la viscosité apparente du fluide magnéto-rhéologique permet par exemple de passer d'un état potentiométrique (couple quasiment sans cran) à un état incrémental (couple à cran à pas variable ou à couple variable).

Pour modifier le champ magnétique traversant le fluide magnéto-rhéologique et donc pour modifier sa viscosité apparente, le codeur 210 comprend une boucle magnétique 223 permettant de créer un champ magnétique avec une intensité variable dans l'espace 213.

En outre, la boucle magnétique 223 est configurée pour modifier l'intensité du champ magnétique dans l'espace 213 en fonction de la position du rotor 33 selon l'axe de codeur X. Autrement dit, cette boucle magnétique 223 permet de modifier l'intensité du champ magnétique dans l'espace 213 en fonction du déplacement en translation du corps mobile 21.

Selon l'exemple de la figure 9, la boucle magnétique 223 comprend un élément magnétique ou ferromagnétique 265 s'étendant au moins partiellement autour de l'espace 213, un anneau magnétique 266 disposé sur le rotor 33 et une dent de bouclage 267 apte à fermer la boucle magnétique 223 lorsque cette dent 267 est disposée en regard de l'anneau magnétique 266.

L'anneau magnétique 266 présente par exemple une surface extérieure présentant une même polarisation magnétique. Cet anneau 266 est par exemple disposé de manière fixe sur le rotor 33 entre le premier anneau 51 et le deuxième anneau 52.

La dent de bouclage 267 est par exemple disposée sur la pièce de raccordement 77 entre les dents de crantage 71, 72 correspondantes. La dent de bouclage 267 est faite par exemple d'un matériau magnétique ou ferromagnétique. Elle est par exemple en contact permanent avec l'élément magnétique ou ferromagnétique 265. Dans certains exemples, une dent de bouclage 267 peut être agencée sur chaque pièce de raccordement 77.

L'anneau magnétique 266 est mobile en translation avec le rotor 33 par rapport à la dent de bouclage 267. Ainsi, chaque mouvement selon l'axe de codeur X du rotor 33 modifie l'alignement de la dent de bouclage 267 par rapport à l'anneau magnétique 266 et donc l'intensité du champ magnétique formé par la boucle magnétique 223.

Selon d'autres exemples de réalisation, le boucle magnétique 223 peut être formée par d'autres moyens. Ces moyens peuvent être passifs, i.e. fonctionner sans alimentation électrique spécifique comme cela est le cas des aimants, ou actifs, i.e. nécessitant une alimentation électrique comme cela est le cas par exemple d'une bobine magnétique.

En outre, dans l'exemple de figure 9, une roue dentée 269 est agencée sur le rotor 33 pour pouvoir tourner dans l'espace 213 selon la direction de rotation C1 en toute position du rotor 33 par rapport à l'axe de codeur X. Cette roue dentée 269 permet ainsi de créer ou de renforcer les crantages discrets lors de la rotation du rotor 33 dans au moins une position prédéterminée du rotor 33 par rapport à l'axe de codeur X.

Bien entendu, d'autres modes de réalisation sont également possibles. Par exemple, il doit être compris que la notion d'un premier corps avec tous les éléments associés peut être appliquée à un corps fixe et la notion d'un deuxième corps avec tous les éléments associés peut être appliquée à un corps mobile. En outre, une pluralité d'alternances magnétiques peut être appliquée à l'anneau de translation et une alternance magnétique unique peut être appliquée à l'anneau de translation. Enfin, les principes d'une boucle magnétique et d'un fluide magnéto-rhéologique modifiant sa viscosité apparente en fonction de l'intensité du champ magnétique créé par la boucle, peuvent être appliqués à la structure du codeur décrite en relation avec le deuxième mode de réalisation.

## Revendications

1. Codeur magnétique incrémental (10 ; 110 ; 210) définissant un axe de codeur (X) et comprenant un corps fixe et un corps mobile par rapport au corps fixe selon au moins une première direction de codage (C1) et une deuxième direction de codage (C2) perpendiculaire à la première direction de codage (C1) ;
l'un des corps, dit premier corps (21 ; 121), comprenant :
- un premier anneau (51) s'étendant selon une première direction longitudinale confondue avec l'axe de codeur (X) et une première direction circonférentielle perpendiculaire à la première direction longitudinale, l'une desdites premières directions correspondant à la première direction de codage (C1), le premier anneau (51) définissant au moins deux alternances magnétiques différentes, chaque alternance magnétique s'étendant selon la première direction de codage (C1) ;
l'autre corps, dit deuxième corps (22 ; 122), comprenant :
- au moins une première dent de crantage (71) en matériau ferromagnétique ou magnétique apte à être disposée en regard de chaque alternance magnétique du premier anneau (51) pour créer, lors d'un mouvement du corps mobile (21 ; 121) selon la première direction de codage (C1), un crantage selon au moins deux pas de crantage différents en fonction de la position du deuxième corps (22 ; 122) par rapport au premier corps (21 ; 121) selon la deuxième direction de codage (C2) ;
- une première paire de détecteurs magnétiques (61) disposés en regard du premier anneau (51) et configurés pour quantifier chaque mouvement du corps mobile selon la première direction de codage (C1).

2. Codeur (10 ; 110 ; 210) selon la revendication 1, dans lequel chaque alternance magnétique est définie par un pas d'alternance constant.

3. Codeur (10 ; 110 ; 210) selon la revendication 1 ou 2, dans lequel :
- le premier corps (21 ; 121) comprend en outre un deuxième anneau (52) s'étendant selon une deuxième direction longitudinale confondue avec l'axe de codeur (X) et une deuxième direction circonférentielle perpendiculaire à la deuxième direction longitudinale, l'une desdites deuxièmes directions correspondant à la deuxième direction de codage (C2), le deuxième anneau (52) définissant une alternance magnétique unique s'étendant selon la deuxième direction de codage (C2) ;
- le deuxième corps (22 ; 122), comprenant :
+ au moins une deuxième dent de crantage (72) en matériau ferromagnétique ou magnétique disposée en regard du deuxième anneau (52) pour créer un crantage selon un même pas de crantage lors d'un mouvement du corps mobile selon la deuxième direction de codage (C2) ;
+ une deuxième paire de détecteurs magnétiques (62) disposés en regard du deuxième anneau (52) et configurés pour quantifier chaque mouvement du corps mobile selon la deuxième direction de codage (C2).

4. Codeur (10 ; 110 ; 210) selon l'une quelconque des revendications précédentes, dans lequel la deuxième direction de codage (C2) correspond à une translation le long de l'axe de codeur (X) selon une longueur de course en translation prédéterminée et la première direction de codage (C1) correspond à une rotation autour de l'axe de codeur (X).

5. Codeur (10 ; 110 ; 210) selon la revendication 4, dans lequel le premier anneau (51) comprend une pluralité d'anneaux élémentaires (51-1, ..., 51-N1) disposés de manière coaxiale l'un à côté de l'autre selon la deuxième direction de codage (C2), au moins deux anneaux élémentaires définissant les deux alternances magnétiques différentes.

6. Codeur (10 ; 110 ; 210) selon la revendication 5, dans lequel le premier anneau (51) comprend au moins trois anneaux élémentaires (51-1, ..., 51-N1) disposés de manière coaxiale l'un à côté de l'autre selon la deuxième direction de codage (C2), les anneaux élémentaires (51-1, ..., 51-N1) définissant au moins trois alternances magnétiques différentes avec un pas d'alternance croissant ou décroissant selon la deuxième direction de codage (C2).

7. Codeur (10 ; 110 ; 210) selon la revendication 5 ou 6 prise en combinaison avec la revendication 3, dans lequel le deuxième anneau (52) comprend une pluralité d'anneaux élémentaires (52-1, ..., 52-N2) disposés de manière coaxiale l'un à côté de l'autre pour définir l'alternance magnétique selon la deuxième direction de codage (C2) ;
la largeur de chaque anneau élémentaire (51-1, ..., 51-N1) du premier anneau (51) est inférieure ou égale à la largeur de chaque paire d'anneaux élémentaires (52-1, ..., 52-N2) du deuxième anneau (52).

8. Codeur (10 ; 110 ; 210) selon l'une quelconque des revendications précédentes prise en combinaison avec la revendication 3, dans lequel :
- le deuxième anneau (52) définit au moins un cran central et deux crans périphériques ;
- une position stable en translation étant définie lorsque la deuxième dent de crantage (72) est disposée en regard du cran central.

9. Codeur (10 ; 110 ; 210) selon l'une quelconque des revendications précédentes, dans laquelle la surface de la ou de chaque dent de crantage (71, 72) présente une étendue inférieure ou égale au plus petit pas de crantage de l'anneau correspondant (51, 52).

10. Codeur (10 ; 110 ; 210) selon l'une quelconque des revendications précédentes, dans lequel les détecteurs magnétiques (61) de la première même paire de détecteurs sont décalés l'un de l'autre d'une fraction du plus petit pas de crantage.

11. Codeur (10 ; 110 ; 210) selon l'une quelconque des revendications précédentes, dans lequel le premier corps (21 ; 121) est le corps mobile et le deuxième corps (22 ; 122) est le corps fixe.

12. Codeur (210) selon l'une quelconque des revendications précédentes, comprenant en outre :
- un fluide magnéto-rhéologique dans un espace (213) formé entre le premier corps (21) et le deuxième corps (22) ;
- une boucle magnétique (223) configurée pour former un champ magnétique au moins dans une partie dudit espace (213) et pour modifier l'intensité de ce champ magnétique en fonction de la position du deuxième corps (22 ; 122) par rapport au premier corps selon (21 ; 121) la deuxième direction de codage (C2).
